# EUROPEAN PATENT APPLICATION

(11) **EP 4 319 150 A1**
(43) Date of publication of application: **07.02.2024**
(21) Application number: 22214500.5
(22) Date of filing: 19.12.2022
(51) Int. Cl.: H04N 13/106

(54) **3D FORMAT IMAGE DETECTION METHOD AND ELECTRONIC APPARATUS USING THE SAME METHOD**

(30) Priority: 02.08.2022 TW 111129017
(71) Applicant: Acer Incorporated, New Taipei City 221 (TW)
(72) Inventor: LIN, Kai-Hsiang, New Taipei City 221, Taiwan (R.O.C.) (TW); CHOU, Hung-Chun, New Taipei City 221, Taiwan (R.O.C.) (TW); HSU, Wen-Cheng, New Taipei City 221, Taiwan (R.O.C.) (TW); LIN, Shih-Hao, New Taipei City 221, Taiwan (R.O.C.) (TW); TAN, Chih-Haw, New Taipei City 221, Taiwan (R.O.C.) (TW)
(74) Representative: Haseltine Lake Kempner LLP

(57) **Abstract**

A 3D format image detection method and an electronic apparatus using the same are provided. The 3D format image detection method includes the following steps. A first image and a second image are obtained by splitting an input image according to a 3D image format. A 3D matching processing is performed on the first image and the second image to generate a disparity map of the first image and the second image. The matching number of a plurality of first pixels in the first image matched with a plurality of second pixels in the second image is calculated according to the disparity map. Whether the input image is a 3D format image conforming to the 3D image format is determined according to the matching number.

## Description

### BACKGROUND

### Technical Field

The disclosure relates to an electronic apparatus, and more particularly, to a 3D format image detection method and an electronic apparatus using the same method.

### Description of Related Art

With the advancement of display technology, displays supporting three dimension (3D) image playback have gradually become popular. The difference between a 3D display and a two dimension (2D) display is that the 3D display technology allows viewers to experience the three dimension effect in the image screen, such as, the three dimension facial features and depth of field of characters, and the like, and traditional 2D images cannot present such effects. In the principle of the 3D display technology, the viewer's left eye is allowed to view the left-eye image and the viewer's right eye is allowed to view the right-eye image, so that the viewer can experience the 3D visual effect. With the vigorous development of 3D display technology, a visually immersive experience can be provided to people. It is known that a 3D display requires a corresponding 3D display technology to play images of a specific 3D image format, otherwise the 3D display may not be able to display the images correctly. Therefore, how to accurately identify the image content conforming to a specific 3D image format is a concern of those skilled in the art.

### SUMMARY

In view of this, the disclosure provides a 3D format image detection method and an electronic apparatus using the same method, which may accurately identify whether an input image is a 3D format image.

In an embodiment of the disclosure, a 3D format image detection method is provided. The method includes steps as follows. A first image and a second image are obtained by dividing an input image according to a 3D image format. A 3D matching processing is performed on the first image and the second image to generate a disparity map of the first image and the second image. A matching number between multiple first pixels in the first image and multiple second pixels in the second image is calculated according to the disparity map. Whether the input image is a 3D format image conforming to the 3D image format is determined according to the matching number.

In an embodiment of the disclosure, an electronic apparatus is provided. The electronic apparatus includes a storage device and a processor. The processor is connected to the storage device and configured to execute steps as follows. A first image and a second image are obtained by dividing an input image according to a 3D image format. A 3D matching processing is performed on the first image and the second image to generate a disparity map of the first image and the second image. A matching number between multiple first pixels in the first image and multiple second pixels in the second image is calculated according to the disparity map. Whether the input image is a 3D format image conforming to the 3D image format is determined according to the matching number.

In summary, in the embodiments of the disclosure, an input image is divided based on a 3D image format to obtain the first image and the second image. A disparity map is obtained by performing a 3D matching processing on the first image and the second image. Whether the input image conforms to the 3D image format may be determined based on the matching condition of the disparity map. Accordingly, whether the input image is a 3D format image can be effectively determined, thereby improving the user experience and the application range of the 3D display technology.

In order to make the features and advantages of the disclosure comprehensible, embodiments accompanied with drawings are described in detail below.

### BRIEF DESCRIPTION OF THE DRAWINGS

FIG. 1 is a schematic view of an electronic apparatus according to an embodiment of the disclosure.
FIG. 2 is a flowchart illustrating a 3D format image detection method according to an embodiment of the disclosure.
FIG. 3A to FIG. 3D are schematic views of dividing an input image according to an embodiment of the disclosure.
FIG. 4 is a flowchart illustrating how to determine whether an input image is a 3D format image according to an embodiment of the disclosure.
FIG. 5 is a flowchart illustrating a 3D format image detection method according to an embodiment of the disclosure.
FIG. 6 is a schematic view illustrating how to acquire a disparity map according to an embodiment of the disclosure.

### DESCRIPTION OF THE EMBODIMENTS

Some embodiments of the disclosure will be described in detail with reference to the accompanying drawings. For reference numerals cited in the following descriptions, the same reference numerals appearing in different drawings are regarded as the same or similar elements. The embodiments are only a part of the disclosure and do not disclose all possible implementations of the disclosure. More precisely, the embodiments are merely examples of the device and the method.

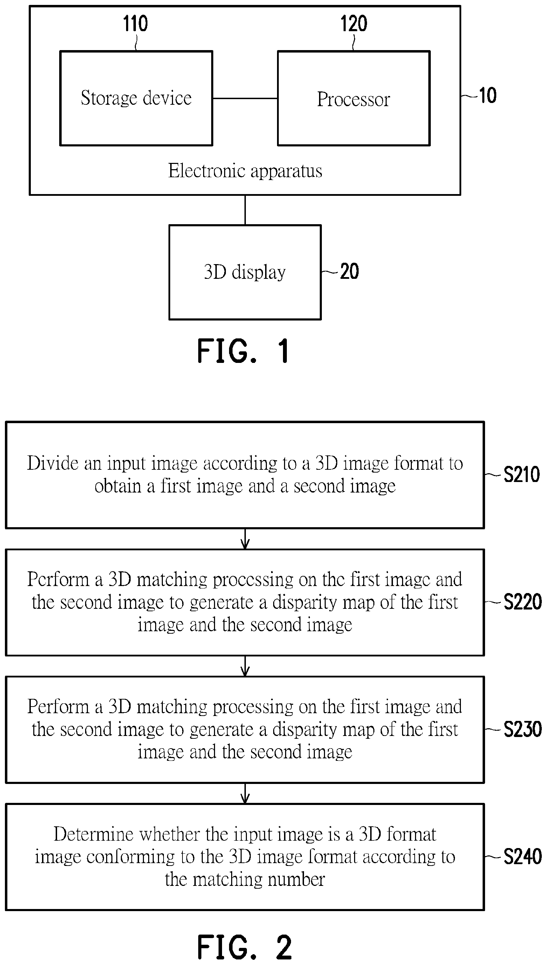

FIG. 1 is a schematic view of an electronic apparatus according to an embodiment of the disclosure. Referring to FIG. 1, an electronic apparatus 10 may include a storage device 110 and a processor 120. The processor 120 is coupled to the storage device 110. The electronic apparatus 10 may be implemented as a laptop computer, a smart phone, a tablet computer, a desktop computer, a set-top box, a game console, or the like.

In one embodiment, the electronic apparatus 10 and a three dimension (3D) display 20 may form a 3D display system. The 3D display 20 may be a naked-view 3D display or a glasses-type 3D display. On the other hand, the 3D display 20 may be a head-mounted display device or a device that provides a 3D image display function, such as a computer monitor, a desktop monitor, a TV set, or the like. The 3D display system can be a single integrated system or a separate system. Specifically, the 3D display 20, the storage device 110, and the processor 120 in the 3D display system can be implemented as an all-in-one (AIO) electronic apparatus, such as a head-mounted display device, a laptop computer, a smart phone, a tablet computer, a game console, and the like. Alternatively, the 3D display 20 can be connected to the processor 120 through a wired transmission interface or a wireless transmission interface, such as a head-mounted display device, a desktop computer monitor, a television set, an electronic signboard, and the like.

The storage device 110 is configured for storing data such as images, data, program codes (e.g., operating system, application programs, drivers) accessed by the processor 120, and the like, and it can be, for example, any type of fixed or removable random access memory (RAM), read-only memory (ROM), flash memory (flash memory), hard disk, or a combination thereof.

The processor 120 is coupled to the storage device 110, for example, a central processing unit (CPU), an application processor (AP), or other programmable general-purpose or special-purpose microprocessors, a digital signal processor (DSP), an image signal processor (ISP), a graphics processing unit (GPU) or other similar devices, integrated circuits or a combination thereof. The processor 120 can access and execute the code and software modules recorded in the storage device 110, so as to implement the 3D format image detection method in the embodiment of the disclosure.

Generally, for the user to experience the 3D visual effect, the user's left eye and right eye need to view image content (i.e., the left-eye image and the right-eye image) corresponding to different viewing angles, respectively. The left-eye image and the right-eye image may be combined into a 3D format image to display the 3D format image through different 3D display technologies, allowing the viewer's left eye to view the left-eye image and the viewer's right eye to view the right-eye image. In the embodiment of the disclosure, the electronic apparatus 10 can determine whether the input image is a 3D format image conforming to the 3D image format. Thus, in some embodiments, the 3D display 20 may support multiple display modes, such as 2D display modes and 3D display modes associated with one or more 3D display technologies. If the electronic apparatus 10 can accurately determine which 3D format the input image is, the 3D display 20 can automatically switch to a suitable display mode to display the 3D format image content.

FIG. 2 is a flowchart illustrating a 3D format image detection method according to an embodiment of the disclosure. Referring to FIG. 2, the method of this embodiment is applicable to the electronic apparatus 10 in the foregoing embodiment. Steps of this embodiment with respect to various elements in the electronic apparatus 10 are illustrated in detail in the subsequent paragraphs.

In step S210, the processor 120 divides the input image according to the 3D image format to obtain the first image and the second image. In some embodiments, the input image may be a single frame of image in a video stream or a video. In some embodiments, the input image may be an image captured with a screen capture function. In some embodiments, the input image may be, for example, an image generated by an application. In some embodiments, the size of the first image is the same as the size of the second image size. That is, a 3D format image may be split into two images of the same resolution.

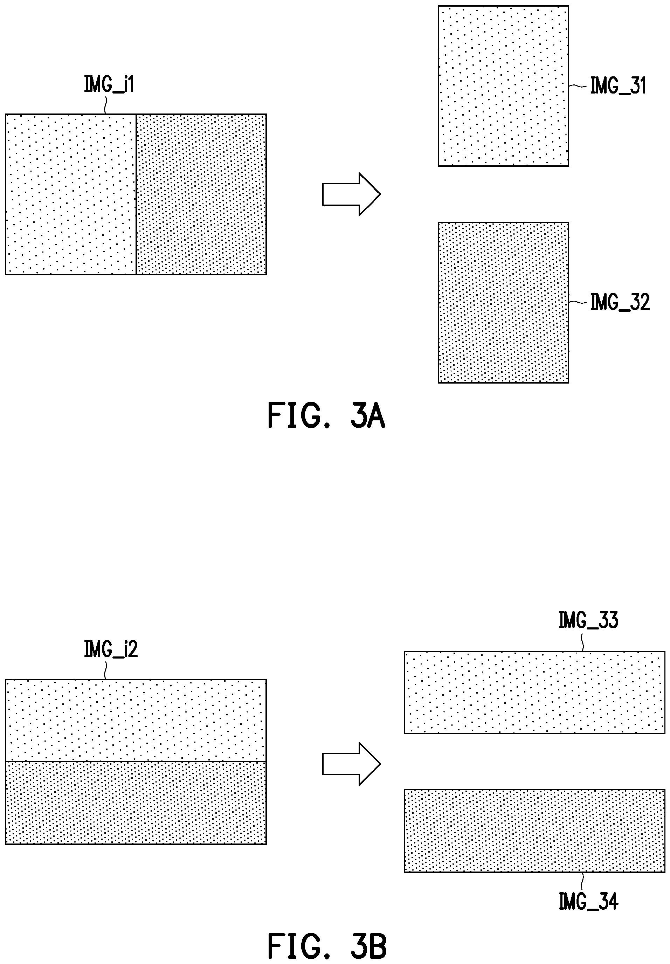

In some embodiments, the 3D image format may include a side-by-side (SBS) format, a top and bottom (TB) format, a checkerboard format, or an interlacing format. The processor 120 may extract the first image and the second image from the 3D format image according to the type of the 3D image format. For example, FIG. 3A to FIG. 3D are schematic views of dividing an input image according to an embodiment of the disclosure.

Referring to the embodiment shown in FIG. 3A, when whether an input image IMG_i1 conforms to the side-by-side (SBS) format is detected, the processor 120 may divide the input image IMG_i1 into a first image IMG_31 on the left half and a second image IMG_32 on the right half.

Referring to the embodiment shown in FIG. 3B, when whether an input image IMG_i2 conforms to the top and bottom (TB) format is detected, the processor 120 may divide the input image IMG_i2 into a first image IMG_33 in the top half and a second image IMG_34 in the bottom half.

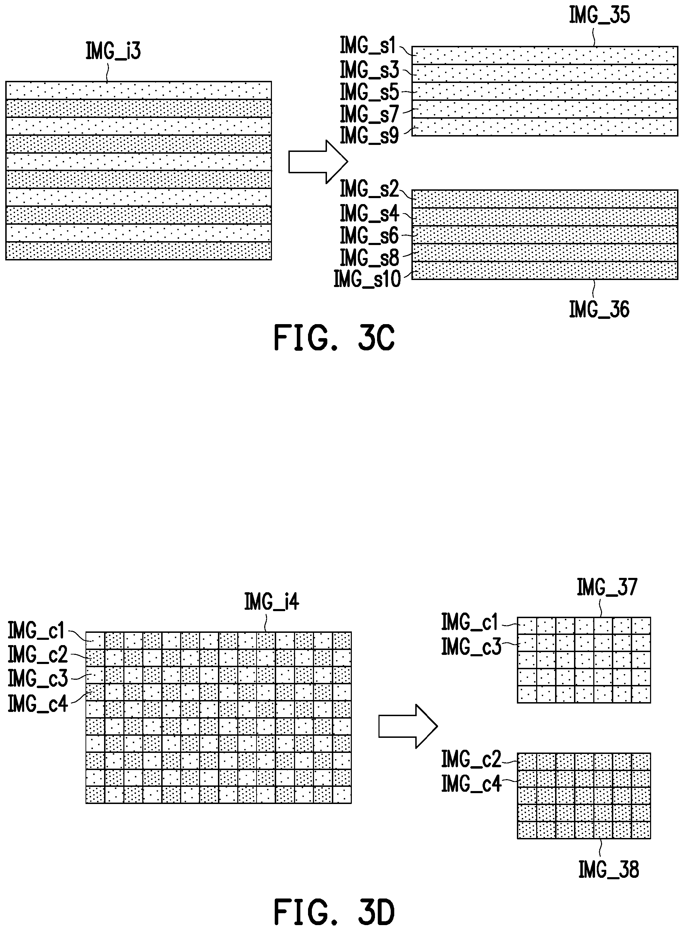

Referring to the embodiment shown in FIG. 3C, when whether the input image IMG_i3 conforms to the interlacing format is detected, the processor 120 may first divide the input image IMG_i3 into multiple sub-images IMG_s1 to IMG_s10 along the horizontal direction. Next, the processor 120 combines the sub-images IMG_s1, IMG_s3, IMG_s5, IMG_s7, and IMG_s9 to obtain the first image IMG_35, and the sub-images IMG_s2, IMG_s4, IMG_s6, IMG_s8, and IMG_s10 are combined to obtain the second image IMG_36. However, the quantity of sub-images shown in FIG. 3C is only for illustration but not intended to limit the disclosure.

Referring to the embodiment shown in FIG. 3D, when whether the input image IMG_i4 conforms to the checkerboard format is detected, the processor 120 may first divide the input image IMG_i4 into multiple sub-images (e.g., sub-images IMG_c1, IMG_c2, IMG_c3, IMG_c4) arranged in a checkerboard format according to the checkerboard pattern. Next, the processor 120 combines the sub-images (e.g., the sub-images IMG_c1 and IMG_c3) to obtain the first image IMG_37, and the sub-images (e.g., the sub-images IMG_c2 and IMG_c4) are combined to obtain the second image IMG_38. However, the quantity of sub-images shown in FIG. 3D is only for illustration but not intended to limit the disclosure.

Next, in step S220, the processor 120 performs a 3D matching processing on the first image and the second image to generate a disparity map of the first image and the second image. In some embodiments, the processor 120 may perform the 3D matching processing on the first image and the second image according to a block-matching algorithm to estimate disparity information and obtain a disparity map. In some embodiments, the processor 120 may perform 3D matching processing on the first image and the second image according to an optical flow algorithm to estimate disparity information and obtain a disparity map. In some embodiments, the processor 120 may input the first image and the second image to a trained deep neural network model to obtain a disparity map. In some embodiments, the number of elements in the disparity map is equal to the resolution of the first image and the second image. For example, assuming that the resolutions of the first image and the second image are 640*480, the disparity map may include disparity information corresponding to 640*480 pixel positions.

In step S230, the processor 120 calculates the matching number between the multiple first pixels in the first image and the multiple second pixels in the second image according to the disparity map. In some embodiments, the disparity map includes multiple valid disparity values and multiple invalid disparity values, and the matching number is the number of valid disparity values.

Specifically, in the 3D matching processing, if a certain first pixel in the first image can be successfully matched with a certain second pixel in the second image, the processor 120 can obtain a corresponding effective disparity value. Conversely, if a certain first pixel in the first image cannot be successfully matched to any second pixel in the second image, the processor 120 may obtain a corresponding invalid disparity value. Therefore, by counting the number of valid disparity values in the disparity map, the matching number of the multiple first pixels in the first image that are successfully matched to the multiple second pixels in the second image can be obtained. In some embodiments, the invalid disparity value in the disparity map may be set to a negative value, and the valid disparity value in the disparity map may be set to an integer value greater than or equal to 0, but the disclosure is not limited thereto.

In step S240, the processor 120 determines whether the input image is a 3D format image conforming to the 3D image format according to the matching number. Accordingly, if the matching number is large enough, it can be determined that the first image and the second image are the left-eye image and the right-eye image corresponding to the same shooting scene, so the processor 120 can determine that the input image is a 3D format image conforming to the 3D image format.

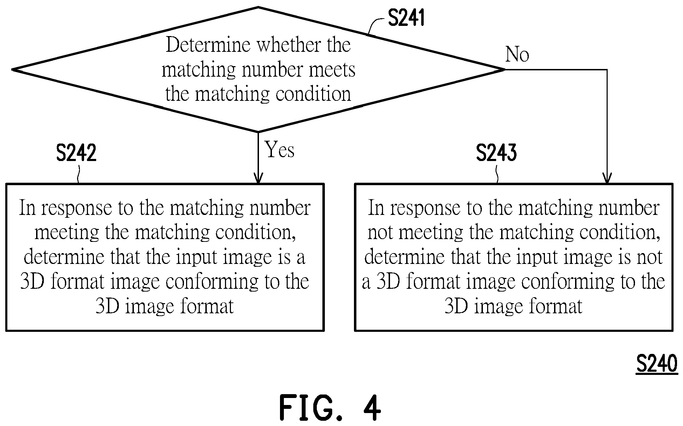

More specifically, FIG. 4 is a flowchart illustrating how to determine whether an input image is a 3D format image according to an embodiment of the disclosure. Referring to FIG. 4, step S240 may be implemented in sub-steps S241 to S243. In sub-step S241, the processor 120 determines whether the matching number meets the matching condition.

In some embodiments, the processor 120 may compare the matching number with a preset threshold to determine whether the matching number meets the matching condition. If the matching number is greater than the preset threshold, the processor 120 may determine that the matching number meets the matching condition. If the matching number is not greater than the preset threshold, the processor 120 may determine that the matching number does not meet the matching condition. The preset threshold can be set according to the image resolution of the input image. That is, different image resolutions correspond to different preset thresholds.

In some embodiments, the processor 120 may calculate the matching ratio of the matching number to the number of the pixels of the first image and determine whether the matching ratio is greater than a threshold. That is, the matching ratio is a ratio of the successfully matched first pixels to all the first pixels in the first image, which can be represented by a percentage or a value less than 1 and greater than 0. If the matching ratio is greater than the threshold, the processor 120 may determine that the matching number meets the matching condition. If the matching ratio is not greater than the threshold, the processor 120 may determine that the matching number does not meet the matching condition. In the embodiment of comparing the matching ratio with the threshold, the same threshold can be applied to different image resolutions.

If it is determined "yes" in step S241, in sub-step S242, in response to the matching number meeting the matching condition, the processor 120 determines that the input image is a 3D format image conforming to the 3D image format. Conversely, if it is determined "no" in step S241, in sub-step S243, in response to the matching number not meeting the matching condition, the processor 120 determines that the input image is not a 3D format image conforming to the 3D image format. That is, if the matching number meets the matching condition, it means that the first image and the second image captured from the input image are the left-eye image and the right-eye image corresponding to the same scene, so it can be determined that the input image is a 3D format image.

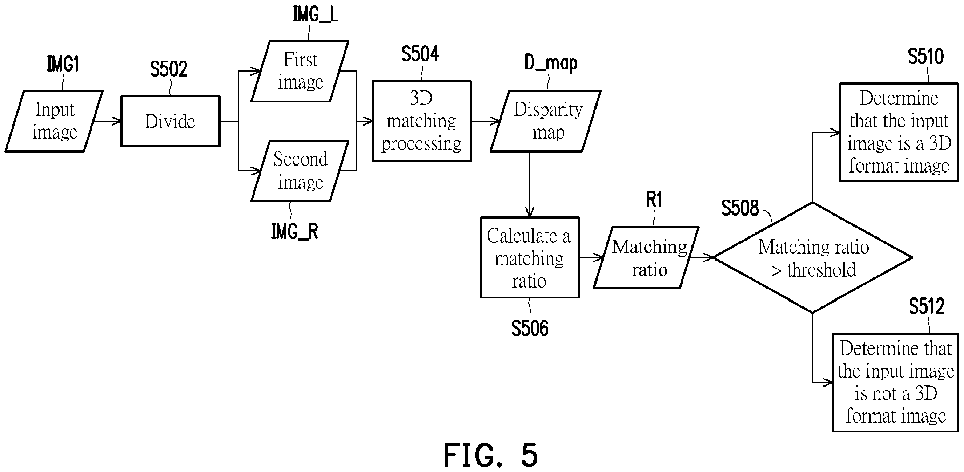

FIG. 5 is a flowchart illustrating a 3D format image detection method according to an embodiment of the disclosure. Referring to FIG. 5, the method of this embodiment is applicable to the electronic apparatus 10 in the foregoing embodiment. Steps of this embodiment with respect to various elements in the electronic apparatus 10 are illustrated in detail in the subsequent paragraphs.

In step S502, the processor 120 divides the input image IMG1 according to the 3D image format to obtain the first image IMG_L and the second image IMG_R. In step S504, the processor 120 performs a 3D matching processing on the first image IMG_L and the second image IMG_R to generate a disparity map D_map of the first image IMG_L and the second image IMG_R.

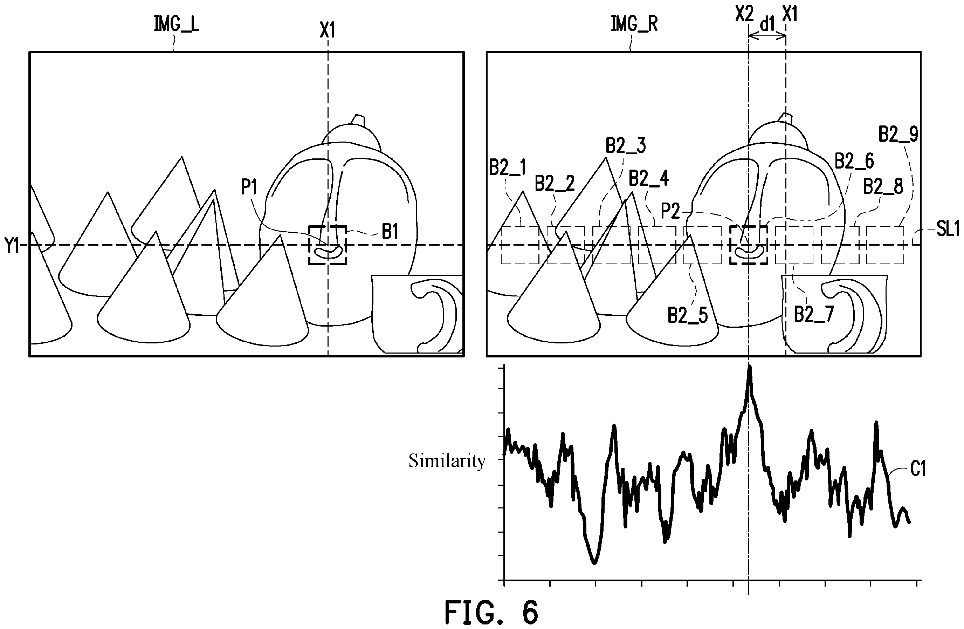

In detail, FIG. 6 is a schematic view illustrating how to acquire a disparity map according to an embodiment of the disclosure. The processor 120 takes the first target pixel point P1 on the first image IMG_L as a center to obtain a first image block B 1. Next, the processor 120 can acquire a horizontal scan line SL1 according to the position of the first target pixel point P1 on the Y axis, so as to acquire multiple second image blocks on the second image IMG_R along the horizontal scan line SL1 (in FIG. 6, the second image blocks B2_1 to B2_9 are illustrated as examples). That is, the position of the first image block B1 on the Y axis is the same as the positions of the second image blocks B2_1 to B2_9 on the Y axis, and the size of the first image block B1 is the same as the sizes of the second image blocks B2_1 to B2_9. Note that the nine second image blocks B2_1 to B2_9 in FIG. 6 are only for illustration. In some embodiments, the processor 120 may acquire multiple second image blocks in a scanning unit of one pixel.

Next, the processor 120 calculates multiple similarities between the first image block B1 and the multiple second image blocks on the second image IMG_R. In some embodiments, these similarities may also be matching costs or values generated based on matching costs. For example, the processor 120 may sequentially calculate the absolute difference between the grayscale value of each first pixel on the first image block B 1 and the grayscale value of the corresponding second pixel on the second image block B2_1, and the reciprocal is taken after summing up all the absolute differences to obtain the similarity between the first image block B1 and the second image block B2_1. Assuming that the size of the first image block B 1 is 91*91, the processor 120 can obtain 91^{∗}91 absolute difference values.

However, in other embodiments, the processor 120 may also be based on other calculation methods, such as the square difference (SD) algorithm, the pixel dissimilarity measure (PDM) algorithm, the normalized cross correlation (NCC) algorithm, and the like to obtain matching costs corresponding to the multiple second image blocks. In some embodiments, the processor 120 may further perform cost aggregation to obtain matching costs corresponding to the multiple second image blocks.

By repeating the steps of similarity calculation along the horizontal scan line SL1, the processor 120 can obtain the similarities corresponding to the multiple second image blocks respectively, that is, the processor 120 sequentially calculates the similarity between the first image and each of the second image blocks, and the similarity corresponding to each of the multiple second image blocks is obtained. Therefore, the processor 120 may obtain a valid disparity value or an invalid disparity value corresponding to the first target pixel point P1 on the disparity map D_map according to the similarities corresponding to the multiple second image blocks on the horizontal scan line SL1, respectively.

Specifically, the processor 120 can determine whether the first image block B 1 matches one of the multiple second image blocks according to the similarities corresponding to the multiple second image blocks on the horizontal scan line SL1, respectively. In the example of FIG. 6, the respective similarities corresponding to the multiple second image blocks on the horizontal scan line SL1 can be shown as a similarity curve C1. The processor 120 may search for a second target image block (i.e., the second image block B2_6 shown in FIG. 6) matching the first image block B1 according to the similarity curve C1. For example, if the processor 120 can search for the maximum similarity of the similarity curve C1 and the maximum similarity is greater than a similarity threshold, the processor 120 can determine that the first image block B1 matches the second image block B2_6 corresponding to the maximum similarity. Alternatively, in some embodiments, if the processor 120 can also search for the minimum dissimilarity among the multiple dissimilarities and the minimum dissimilarity is less than a dissimilarity threshold, the processor 120 can determine that the first image block B1 matches a second image block corresponding to the minimum dissimilarity. In some embodiments, the dissimilarity may be a reciprocal of the similarity. In addition, in some embodiments, the processor 120 may further search for a second image block matching the first image block B1 by substituting the matching costs into an energy function and optimizing the energy function.

As shown in FIG. 6, if the second target image block (i.e., the second image block B2_6) matching the first image block B1 in the second image block is obtained according to the similarity, the processor 120 obtains a valid disparity value d1 corresponding to the first target pixel point P1 on the disparity map D_map based on the position X2 of the second target pixel point P2 on the X axis and the position X1 of the first target pixel point P1 on the X axis in the center of the second target image block. On the other hand, if the second target image block matching the first image block B1 in the second image block is not obtained according to the similarity, it means that the similarities corresponding to these second image blocks do not meet the preset conditions, such as the maximum similarity is not greater than the similarity threshold, and the minimum dissimilarity is not less than the dissimilarity threshold, or the problem of optimizing the energy function is unsolvable, and the like. Therefore, if the second target image block matching the first image block B1 in the second image block is not obtained according to the similarity, the processor 120 may obtain the invalid disparity value corresponding to the first target pixel point P1 on the disparity map D_map. Alternatively, in some embodiments, the processor 120 may perform a de-noise processing on the disparity map D_map, and multiple original valid disparity values with lower reliability may be replaced with invalid disparity values.

Referring back to FIG. 5, in step S506, the processor 120 calculates the matching number according to the disparity map D_map and a matching ratio R1 of the matching number to the number of the pixels of the first image IMG_L. That is, the matching ratio R1 is obtained by dividing the matching number by the number of the pixels of the first image IMG_L. In step S508, the processor 120 determines whether the matching ratio R1 is greater than the threshold. If so, in step S510, the processor 120 determines that the input image is a 3D format image, and the 3D display 20 may be controlled to display the input image in a corresponding 3D mode. For example, the processor 120 may determine that the input image is a 3D format image. If not, in step S512, the processor 120 determines that the input image is not a 3D format image, and the 3D display 20 may be controlled to display the input image in a 2D mode.

Note that the processing procedure of the 3D format image detection method executed by at least one processor is not limited to the examples of the foregoing embodiments. For example, some of the steps (processing) may be omitted, and the steps may be performed in other order. In addition, any two or more of the steps may be combined, and some of the steps may be corrected or deleted. Alternatively, other steps may also be performed in addition to the steps.

In summary, in the embodiments of the disclosure, whether the input image is a 3D format image conforming to various different 3D image formats can be effectively identified, and the user experience and the application range of the 3D display technology can be improved. For example, after determining that the input image is a 3D format image, the 3D display can automatically switch to an appropriate image playback mode, thereby improving the user experience. Alternatively, after determining that the input image is a 3D format image, the 3D display can acquire the blocks occupied by the left-eye image and the right-eye image in the input image, so as to facilitate image processing required for the subsequent 3D display.

## Claims

1. A 3D format image detection method, adapted for an electronic apparatus (10), wherein the 3D format image detection method comprises:
obtaining a first image (IMG_3 1, IMG_3 3, IMG_3 5, IMG_3 7, IMG_L) and a second image (IMG_32, IMG_34, IMG_36, IMG_38, IMG_R) by dividing an input image (IMG_i1, IMG_i2, IMG_i3, IMG_i4, IMG1) according to a 3D image format;
performing a 3D matching processing on the first image (IMG_31, IMG_33, IMG_3 5, IMG_37, IMG_L) and the second image (IMG_32, IMG_34, IMG_36, IMG_38, IMG_R) to generate a disparity map (D_map) of the first image (IMG_31, IMG_33, IMG_35, IMG_37, IMG_L) and the second image (IMG_32, IMG_34, IMG_36, IMG_3 8, IMG_R);
calculating a matching number between a plurality of first pixels in the first image (IMG_31, IMG_33, IMG_35, IMG_37, IMG_L) and a plurality of second pixels in the second image (IMG_32, IMG_34, IMG_36, IMG_38, IMG_R) according to the disparity map (D_map); and
determining whether the input image (IMG_i1, IMG_i2, IMG_i3, IMG_i4, IMG1) is a 3D format image conforming to the 3D image format according to the matching number.

2. The 3D format image detection method of claim 1, wherein the step of determining whether the input image (IMG_i1, IMG_i2, IMG_i3, IMG_i4, IMG1) is the 3D format image conforming to the 3D image format according to the matching number comprises:
determining whether the matching number meets a matching condition;
determining that the input image (IMG_i1, IMG_i2, IMG_i3, IMG_i4, IMG1) is the 3D format image conforming to the 3D image format in response to the matching number meeting the matching condition; and
determining that the input image (IMG_i1, IMG_i2, IMG_i3, IMG_i4, IMG1) is not the 3D format image conforming to the 3D image format in response to the matching number not meeting the matching condition.

3. The 3D format image detection method of claim 2, wherein the step of determining whether the matching number meets the matching condition comprises:
calculating a matching ratio (R1) of the matching number to a number of pixels of the first image (IMG_31, IMG_33, IMG_35, IMG_37, IMG_L); and
determining whether the matching ratio (R1) is greater than a threshold,
wherein if the matching ratio (R1) is greater than the threshold, the matching number meets the matching condition; and if the matching ratio (R1) is not greater than the threshold, the matching number does not meet the matching condition.

4. The 3D format image detection method of claim 1, wherein the disparity map (D_map) comprises a plurality of valid disparity values (d1) and a plurality of invalid disparity values, and the matching number is a number of the valid disparity values (d1).

5. The 3D format image detection method of claim 1, wherein the step of performing the 3D matching processing on the first image (IMG_3 1, IMG_33, IMG_35, IMG_37, IMG_L) and the second image (IMG_32, IMG_34, IMG_36, IMG_38, IMG_R) to generate the disparity map (D_map) of the first image (IMG_31, IMG_33, IMG_3 5, IMG_37, IMG_L) and the second image (IMG_32, IMG_34, IMG_36, IMG_38, IMG_R) comprises:
obtaining a first image block (B1) by taking a first target pixel point (P1) on the first image (IMG_31, IMG_33, IMG_35, IMG_37, IMG_L) as a center;
calculating a plurality of similarities between the first image block (B1) and a plurality of second image blocks (B2_1-B2_9) on the second image (IMG_32, IMG_34, IMG_36, IMG_3 8, IMG_R), wherein a position (Y1) of the first image block (B1) on a Y axis is the same as a position (Y1) of the second image block (B2_1-B2_9) on the Y axis; and
obtaining a valid disparity value (d1) or an invalid disparity value corresponding to the first target pixel point (P1) on the disparity map (D_map) according to the similarities corresponding to the respective second image block (B2_1-B2_9).

6. The 3D format image detection method of claim 5, the step of obtaining the valid disparity value (d1) or the invalid disparity value corresponding to the first target pixel point (P1) on the disparity map (D_map) according to the similarities corresponding to the respective second image block (B2_1-B2_9) comprises:
obtaining the valid disparity value (d1) corresponding to the first target pixel point (P1) on the disparity map (D_map) based on a position (X1, X2) of a second target pixel point (P2) on an X axis in a center of a second target image block (B2_1-B2_9) and a position (X1, X2) of the first target pixel point (P1) on the X axis if the second target image block (B2_1-B2_9) matching a first target image block (B1) in the second image block (B2_1-B2_9) is obtained according to the similarity; and
obtaining the invalid disparity value corresponding to the first target pixel point (P1) on the disparity map (D_map) if the second target image block (B2_1-B2_9) matching the first target image block (B1) in the second image block (B2_1-B2_9) is not obtained according to the similarity.

7. The 3D format image detection method of claim 1, wherein a size of the first image (IMG_3 1, IMG_33, IMG_3 5, IMG_3 7, IMG_L) is the same as a size of the second image (IMG_32, IMG_34, IMG_36, IMG_38, IMG_R).

8. The 3D format image detection method of claim 1, wherein the 3D image format comprises a side-by-side format, a top and bottom format, a checkerboard format, or an interlacing format.

9. An electronic apparatus (10), comprising:
a storage device (110) storing a plurality of modules; and
a processor (120) connected to the storage device (110) and configured to:
obtain a first image (IMG_31, IMG_33, IMG_35, IMG_37, IMG_L) and a second image (IMG_32, IMG_34, IMG_36, IMG_3 8, IMG_R) by dividing an input image (IMG_i1, IMG_i2, IMG_i3, IMG_i4, IMG1) according to a 3D image format;
perform a 3D matching processing on the first image (IMG_31, IMG_33, IMG_35, IMG_37, IMG_L) and the second image (IMG_32, IMG_34, IMG_36, IMG_38, IMG_R) to generate a disparity map (D_map) of the first image (IMG_31, IMG_33, IMG_35, IMG_37, IMG_L) and the second image (IMG_32, IMG_34, IMG_36, IMG_38, IMG_R);
calculate a matching number between a plurality of first pixels in the first image (IMG_31, IMG_33, IMG_35, IMG_37, IMG_L) and a plurality of second pixels in the second image (IMG_32, IMG_34, IMG_36, IMG_38, IMG_R) according to the disparity map (D_map); and
determine whether the input image (IMG_i1, IMG_i2, IMG_i3, IMG_i4, IMG1) is a 3D format image conforming to the 3D image format according to the matching number.

10. The electronic apparatus (10) of claim 9, wherein the processor (120) is configured to:
determine whether the matching number meets a matching condition;
determine that the input image (IMG_i1, IMG_i2, IMG_i3, IMG_i4, IMG1) is the 3D format image conforming to the 3D image format in response to the matching number meeting the matching condition; and
determine that the input image (IMG_i1, IMG_i2, IMG_i3, IMG_i4, IMG1) is not the 3D format image conforming to the 3D image format in response to the matching number not meeting the matching condition.

11. The electronic apparatus (10) of claim 10, wherein the processor (120) is configured to:
calculate a matching ratio (R1) of the matching number to a number of pixels of the first image (IMG_31, IMG_33, IMG_35, IMG_37, IMG_L); and
determine whether the matching ratio (R1) is greater than a threshold,
wherein if the matching ratio (R1) is greater than the threshold, the matching number meets the matching condition; and if the matching ratio (R1) is not greater than the threshold, the matching number does not meet the matching condition.

12. The electronic apparatus (10) of claim 9, wherein the disparity map (D_map) comprises a plurality of valid disparity values (d1) and a plurality of invalid disparity values, and the matching number is a number of the valid disparity values (d1).

13. The electronic apparatus (10) of claim 9, wherein the processor (120) is configured to:
obtain a first image block (B1) by taking a first target pixel point (P1) on the first image (IMG_31, IMG_33, IMG_35, IMG_37, IMG_L) as a center;
calculate a plurality of similarities between the first image block (B1) and a plurality of second image blocks (B2_1-B2_9) on the second image (IMG_32, IMG_34, IMG_36, IMG_3 8, IMG_R), wherein a position (Y1) of the first image block (B1) on a Y axis is the same as a position (Y1) of the second image block (B2_1-B2_9) on the Y axis; and
obtain a valid disparity value (d1) or an invalid disparity value corresponding to the first target pixel point (P1) on the disparity map (D_map) according to the similarities corresponding to the respective second image block (B2_1-B2_9).

14. The electronic apparatus (10) of claim 13, wherein the processor (120) is configured to:
obtaining the valid disparity value (d1) corresponding to the first target pixel point (P1) on the disparity map (D_map) based on a position (X1, X2) of a second target pixel point (P2) on an X axis in a center of a second target image block (B2_1-B2_9) and a position (X1, X2) of the first target pixel point (P1) on the X axis if the second target image block (B2_1-B2_9) matching a first target image block (B1) in the second image block (B2_1-B2_9) is obtained according to the similarity; and
obtain the invalid disparity value corresponding to the first target pixel point (P1) on the disparity map (D_map) if the second target image block (B2_1-B2_9) matching the first target image block (B1) in the second image block (B2_1-B2_9) is not obtained according to the similarity.

15. The electronic apparatus (10) of claim 9, wherein a size of the first image (IMG_3 1, IMG_33, IMG_35, IMG_37, IMG_L) is the same as a size of the second image (IMG_32, IMG_34, IMG_36, IMG_38, IMG_R).

16. The electronic apparatus (10) of claim 9, wherein the 3D image format comprises a side-by-side format, a top and bottom format, a checkerboard format, or an interlacing format.

## Amended claims

### Amended claims in accordance with Rule 137(2) EPC.

1. A 3D format image detection method, adapted for an electronic apparatus (10), wherein the 3D format image detection method comprises:
obtaining a first image (IMG_3 1, IMG_33, IMG_35, IMG_3 7, IMG_L) and a second image (IMG_32, IMG_34, IMG_36, IMG_38, IMG_R) by dividing an input image (IMG_i1, IMG_i2, IMG_i3, IMG_i4, IMG1) according to a 3D image format;
performing a 3D matching processing on the first image (IMG_31, IMG_33, IMG_3 5, IMG_37, IMG_L) and the second image (IMG_32, IMG_34, IMG_36, IMG_38, IMG_R) to generate a disparity map (D_map) of the first image (IMG_31, IMG_33, IMG_35, IMG_37, IMG_L) and the second image (IMG_32, IMG_34, IMG_36, IMG_3 8, IMG_R);
calculating a matching number between a plurality of first pixels in the first image (IMG_31, IMG_33, IMG_35, IMG_37, IMG_L) and a plurality of second pixels in the second image (IMG_32, IMG_34, IMG_36, IMG_38, IMG_R) according to the disparity map (D_map); and
determining whether the input image (IMG_i1, IMG_i2, IMG_i3, IMG_i4, IMG1) is a 3D format image conforming to the 3D image format according to the matching number, wherein the disparity map (D_map) comprises a plurality of valid disparity values (d1) and a plurality of invalid disparity values, and the matching number is a number of the valid disparity values (d1).

2. The 3D format image detection method of claim 1, wherein the step of determining whether the input image (IMG_i1, IMG_i2, IMG_i3, IMG_i4, IMG1) is the 3D format image conforming to the 3D image format according to the matching number comprises:
determining whether the matching number meets a matching condition;
determining that the input image (IMG_i1, IMG_i2, IMG_i3, IMG_i4, IMG1) is the 3D format image conforming to the 3D image format in response to the matching number meeting the matching condition; and
determining that the input image (IMG_i1, IMG_i2, IMG_i3, IMG_i4, IMG1) is not the 3D format image conforming to the 3D image format in response to the matching number not meeting the matching condition.

3. The 3D format image detection method of claim 2, wherein the step of determining whether the matching number meets the matching condition comprises:
calculating a matching ratio (R1) of the matching number to a number of pixels of the first image (IMG_31, IMG_33, IMG_35, IMG_37, IMG_L); and
determining whether the matching ratio (R1) is greater than a threshold,
wherein if the matching ratio (R1) is greater than the threshold, the matching number meets the matching condition; and if the matching ratio (R1) is not greater than the threshold, the matching number does not meet the matching condition.

4. The 3D format image detection method of claim 1, wherein the step of performing the 3D matching processing on the first image (IMG_3 1, IMG_33, IMG_35, IMG_37, IMG_L) and the second image (IMG_32, IMG_34, IMG_36, IMG_38, IMG_R) to generate the disparity map (D_map) of the first image (IMG_31, IMG_33, IMG_3 5, IMG_37, IMG_L) and the second image (IMG_32, IMG_34, IMG_36, IMG_38, IMG_R) comprises:
obtaining a first image block (B1) by taking a first target pixel point (P1) on the first image (IMG_31, IMG_33, IMG_35, IMG_37, IMG_L) as a center;
calculating a plurality of similarities between the first image block (B1) and a plurality of second image blocks (B2_1-B2_9) on the second image (IMG_32, IMG_34, IMG_36, IMG_3 8, IMG_R), wherein a position (Y1) of the first image block (B1) on a Y axis is the same as a position (Y1) of the second image block (B2_1-B2_9) on the Y axis; and
obtaining a valid disparity value (d1) or an invalid disparity value corresponding to the first target pixel point (P1) on the disparity map (D_map) according to the similarities corresponding to the respective second image block (B2_1-B2_9).

5. The 3D format image detection method of claim 4, the step of obtaining the valid disparity value (d1) or the invalid disparity value corresponding to the first target pixel point (P1) on the disparity map (D_map) according to the similarities corresponding to the respective second image block (B2_1-B2_9) comprises:
obtaining the valid disparity value (d1) corresponding to the first target pixel point (P1) on the disparity map (D_map) based on a position (X1, X2) of a second target pixel point (P2) on an X axis in a center of a second target image block (B2_1-B2_9) and a position (X1, X2) of the first target pixel point (P1) on the X axis if the second target image block (B2_1-B2_9) matching a first target image block (B1) in the second image block (B2_1-B2_9) is obtained according to the similarity; and
obtaining the invalid disparity value corresponding to the first target pixel point (P1) on the disparity map (D_map) if the second target image block (B2_1-B2_9) matching the first target image block (B1) in the second image block (B2_1-B2_9) is not obtained according to the similarity.

6. The 3D format image detection method of claim 1, wherein a size of the first image (IMG_3 1, IMG_33, IMG_3 5, IMG_3 7, IMG_L) is the same as a size of the second image (IMG_32, IMG_34, IMG_36, IMG_38, IMG_R).

7. The 3D format image detection method of claim 1, wherein the 3D image format comprises a side-by-side format, a top and bottom format, a checkerboard format, or an interlacing format.

8. An electronic apparatus (10), comprising:
a storage device (110) storing a plurality of modules; and
a processor (120) connected to the storage device (110) and configured to:
obtain a first image (IMG_3 1, IMG_33, IMG_35, IMG_37, IMG_L) and a second image (IMG_32, IMG_34, IMG_36, IMG_38, IMG_R) by dividing an input image (IMG_i1, IMG_i2, IMG_i3, IMG_i4, IMG1) according to a 3D image format;
perform a 3D matching processing on the first image (IMG_31, IMG_33, IMG_35, IMG_37, IMG_L) and the second image (IMG_32, IMG_34, IMG_36, IMG_38, IMG_R) to generate a disparity map (D_map) of the first image (IMG_31, IMG_33, IMG_35, IMG_37, IMG_L) and the second image (IMG_32, IMG_34, IMG_36, IMG_38, IMG_R);
calculate a matching number between a plurality of first pixels in the first image (IMG_31, IMG_33, IMG_35, IMG_37, IMG_L) and a plurality of second pixels in the second image (IMG_32, IMG_34, IMG_36, IMG_38, IMG_R) according to the disparity map (D_map); and
determine whether the input image (IMG_i1, IMG_i2, IMG_i3, IMG_i4, IMG1) is a 3D format image conforming to the 3D image format according to the matching number, wherein the disparity map (D_map) comprises a plurality of valid disparity values (d1) and a plurality of invalid disparity values, and the matching number is a number of the valid disparity values (d1).

9. The electronic apparatus (10) of claim 8, wherein the processor (120) is configured to:
determine whether the matching number meets a matching condition;
determine that the input image (IMG_i1, IMG_i2, IMG_i3, IMG_i4, IMG1) is the 3D format image conforming to the 3D image format in response to the matching number meeting the matching condition; and
determine that the input image (IMG_i1, IMG_i2, IMG_i3, IMG_i4, IMG1) is not the 3D format image conforming to the 3D image format in response to the matching number not meeting the matching condition.

10. The electronic apparatus (10) of claim 9, wherein the processor (120) is configured to:
calculate a matching ratio (R1) of the matching number to a number of pixels of the first image (IMG_31, IMG_33, IMG_35, IMG_37, IMG_L); and
determine whether the matching ratio (R1) is greater than a threshold,
wherein if the matching ratio (R1) is greater than the threshold, the matching number meets the matching condition; and if the matching ratio (R1) is not greater than the threshold, the matching number does not meet the matching condition.

11. The electronic apparatus (10) of claim 8, wherein the processor (120) is configured to:
obtain a first image block (B1) by taking a first target pixel point (P1) on the first image (IMG_31, IMG_33, IMG_35, IMG_37, IMG_L) as a center;
calculate a plurality of similarities between the first image block (B1) and a plurality of second image blocks (B2_1-B2_9) on the second image (IMG_32, IMG_34, IMG_36, IMG_3 8, IMG_R), wherein a position (Y1) of the first image block (B1) on a Y axis is the same as a position (Y1) of the second image block (B2_1-B2_9) on the Y axis; and
obtain a valid disparity value (d1) or an invalid disparity value corresponding to the first target pixel point (P1) on the disparity map (D_map) according to the similarities corresponding to the respective second image block (B2_1-B2_9).

12. The electronic apparatus (10) of claim 11, wherein the processor (120) is configured to:
obtaining the valid disparity value (d1) corresponding to the first target pixel point (P1) on the disparity map (D_map) based on a position (X1, X2) of a second target pixel point (P2) on an X axis in a center of a second target image block (B2_1-B2_9) and a position (X1, X2) of the first target pixel point (P1) on the X axis if the second target image block (B2_1-B2_9) matching a first target image block (B1) in the second image block (B2_1-B2_9) is obtained according to the similarity; and
obtain the invalid disparity value corresponding to the first target pixel point (P1) on the disparity map (D_map) if the second target image block (B2_1-B2_9) matching the first target image block (B1) in the second image block (B2_1-B2_9) is not obtained according to the similarity.

13. The electronic apparatus (10) of claim 8, wherein a size of the first image (IMG_3 1, IMG_33, IMG_35, IMG_37, IMG_L) is the same as a size of the second image (IMG_32, IMG_34, IMG_36, IMG_38, IMG_R).

14. The electronic apparatus (10) of claim 8, wherein the 3D image format comprises a side-by-side format, a top and bottom format, a checkerboard format, or an interlacing format.
